# EUROPEAN PATENT APPLICATION

(11) **EP 2 355 062 A1**
(43) Date of publication of application: **10.08.2011**
(21) Application number: 11150977.4
(22) Date of filing: 14.01.2011
(51) Int. Cl.: G07F 19/00

(54) **Selecting a mix of denominations**

(30) Priority: 05.02.2010 US 700934
(71) Applicant: NCR Corporation, Duluth, Georgia 30096 (US)
(72) Inventor: Joy, Ian, St. Andrews Fife KY16 9YA (GB); Patton, Gordon, Dundee Tayside DD3 8LJ (GB)
(74) Representative: MacLeod, Roderick William

(57) **Abstract**

A graphical user interface (GUI) (60) for enabling a user to select a mix of denominations to complete a dispense transaction for a desired amount. The GUI (60) comprises: a denomination region (62) and a selection region (64). The denomination region (62) includes a plurality of groups (70, 80, 90, 100, 110, 120) of different denominations, each group (70, 80, 90, 100, 110, 120) illustrating a selectable front media item (72, 82, 92, 102, 112, 122) indicating the denomination value, and at least one selectable tab illustrating a value for a multiple of that denomination value. The selection region (64) comprises a region (66) into which one or more selected front media items (72, 82, 92, 102, 112, 122) and one or more selected tabs can be placed by the user until the desired amount to be dispensed is reached.

## Description

The present invention relates to selecting a mix of denominations.

When bank customers withdraw cash at a bank branch, they sometimes request the type and quantity of denominations that will be used to fulfil their transaction. For example, if a customer withdraws one hundred dollars, they may ask for three twenty dollar bills, three ten dollar bills, and two five dollar bills.

Some self-service terminals (SSTs), such as those used in gaming environments (for example casino chip dispensers), allow a user to request the type and quantity of denominations that will be used to fulfil his/her transaction, but the user interface provided is typically controlled with up and down arrow keys, or by entering numbers for each denomination type. This user interface is difficult to use, which leads to inefficiency in operating the terminal.

It would be desirable to enhance the operability of the user interface to make the human-machine interface more efficient and intuitive, and also to simulate conventional interaction with real media. In particular, it would be desirable to decrease both the necessary mental and physical effort of the user in requesting the type and quantity of denominations that will be used to fulfil his/her transaction.

Accordingly, the invention generally provides methods, systems, apparatus, and software for selecting a desired mix of media items.

In addition to the Summary of Invention provided above and the subject matter disclosed below in the Detailed Description, the following paragraphs of this section are intended to provide further basis for alternative claim language for possible use during prosecution of this application, if required. If this application is granted, some aspects of the invention may relate to claims added during prosecution of this application, other aspects may relate to claims deleted during prosecution, other aspects may relate to subject matter never claimed. Furthermore, the various aspects detailed hereinafter are independent of each other, except where stated otherwise. Any claim corresponding to one aspect should not be construed as incorporating any element or feature of the other aspects unless explicitly stated in that claim.

According to a first aspect there is provided a method for enabling a user to select a mix of denominations to complete a dispense transaction for a desired amount, the method comprising:
(i) presenting to the user a denomination selection screen including
   (a) a denomination region including a plurality of groups of different denominations, each group illustrating a selectable front media item indicating the denomination value, and at least one selectable tab illustrating a value for a multiple of that denomination value; and
   (b) a selection region into which one or more selected front media items and one or more selected tabs can be placed by the user until the desired amount to be dispensed is reached; and
(ii) creating a signal indicative of the selected front media items and the selected tabs so that the created signal can be used by a dispenser to dispense the desired amount comprising the selected denominations.

The method may further comprise transmitting the created signal to a controller associated with a dispenser.

The method may further comprise dispensing a desired amount to the user based on the transmitted signal, where the desired amount comprises denominations of the type and number corresponding to the type and number of denominations selected by the user.

The step of presenting to the user a denomination selection screen may be implemented by a graphical user interface.

As used herein, "denomination" refers to one media type in a series of associated media types. For example, the series of associated media types may be postage stamps, and each denomination may be a different value of postage stamp. Other examples of different series of associated media types include: currency, casino chips, coupons, passes, and the like.

The denominations may comprise currency denominations, such as different banknote values of the same currency type (for example, U.S. dollars), or from different currency types (for example, U.S. dollars, Pound sterling, Euros). The denominations may comprise media of exchange that is not issued by (or under authority of) a government, such as casino chips, or a mix of currencies, casino chips, coupons, and the like.

Each group of different denominations may include a plurality of selectable tabs, each tab illustrating a different value.

The selection region may include a total area that displays the total amount placed by the user in the selection region.

It should now be appreciated that the graphical user interface provides an input mechanism that allows a user (such as a customer or a teller) to select the desired quantity and type of denomination to be used, and thereafter the user interface functions as a programming mechanism in that information entered via the user interface is used to create a signal that is transferred to a memory and used to instruct operation of a dispenser.

It should now be appreciated that the above aspect addresses the technical problem by decreasing both the necessary mental and physical effort of the user in requesting the type and quantity of denominations that will be used to fulfil his/her transaction.

According to a second aspect there is provided a graphical user interface for enabling a user to select a mix of denominations to complete a dispense transaction for a desired amount, the graphical user interface comprising:
(a) a denomination region including a plurality of groups of different denominations, each group illustrating a selectable front media item indicating the denomination value, and at least one selectable tab illustrating a value for a multiple of that denomination value; and
(b) a selection region into which one or more selected front media items and one or more selected tabs can be placed by the user until the desired amount to be dispensed is reached.

According to a third aspect there is provided a system comprising a display; a processor; and a storage device operable to store instructions that when executed by the processor presents on the display a graphical user interface according to the second aspect.

The system may further comprise a dispenser for dispensing media items to the user in response to a signal received from the processor.

The system may comprise a self-service terminal (where the user is a customer), a teller-assisted terminal (where the user is a member of staff), or the like.

The self-service terminal be an automated teller machine (ATM), an information kiosk, a financial services center, a bill payment kiosk, a lottery kiosk, a postal services machine, a check-in and/or check-out terminal such as those used in the retail, hotel, car rental, gaming, healthcare, and airline industries, or the like.

According to a fourth aspect there is provided a computer program that, when executed, performs the method steps of the first aspect.

According to a fifth aspect there is provided a computer readable medium tangibly embodying the computer program of the fourth aspect.

For clarity and simplicity of description, not all combinations of elements provided in the aspects recited above have been set forth expressly. Notwithstanding this, the skilled person will directly and unambiguously recognise that unless it is not technically possible, or it is explicitly stated to the contrary, the consistory clauses referring to one aspect are intended to apply *mutatis mutandis* as optional features of every other aspect to which those consistory clauses could possibly relate.

These and other aspects will be apparent from the following specific description, given by way of example, with reference to the accompanying drawings, in which:
Fig 1 is a block diagram of a terminal according to one embodiment of the present invention;
Fig 2 is a pictorial diagram of a graphical user interface presented on a part (a customer display) of the terminal of Fig 1; and
Fig 3 is a flowchart illustrating steps implemented by the terminal of Fig 1 in allowing a user to select a desired mix of type and quantity of denominations for a dispense transaction.

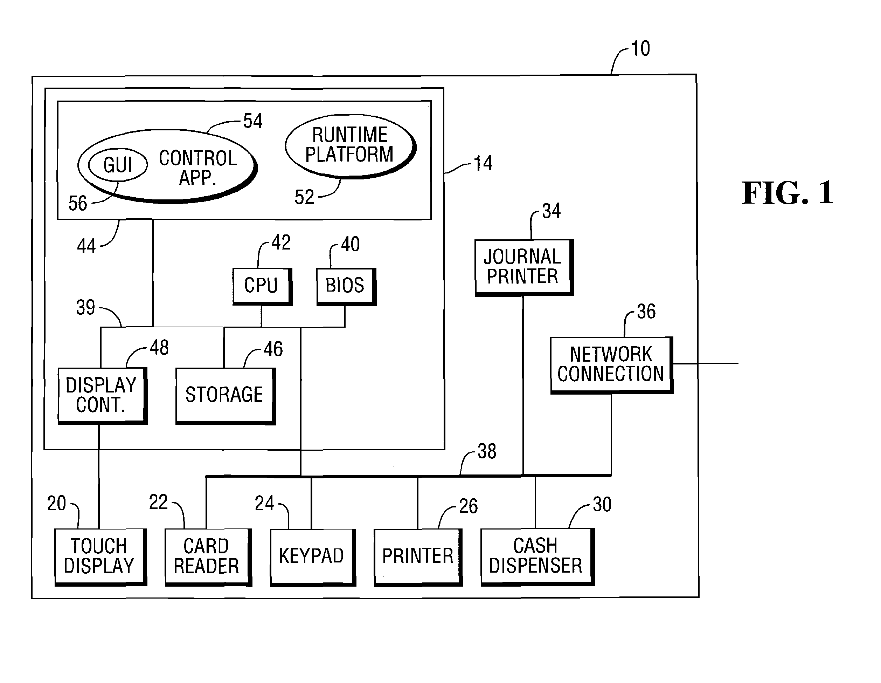

Reference is first made to Fig 1, which is a simplified, schematic diagram of a terminal 10, in the form of an automated teller machine (ATM), according to one embodiment of the present invention.

The ATM 10 comprises a plurality of modules for enabling transactions to be executed and recorded by the ATM 10. These ATM modules comprise: a controller module 14, a customer display module (with integrated touch-sensitive panel) 20, a card reader/writer module 22, an encrypting keypad module 24, a receipt printer module 26, a cash dispenser module 30, a journal printer module 34 for creating a record of every transaction executed by the ATM 10, and a network connection module 36 (in the form of an enhanced network card) for accessing a remote authorization system (not shown) and a remote state of health management system (not shown).

The controller 14 comprises a Basic Input/Output System (BIOS) 40 stored in non-volatile memory, a microprocessor 42, main memory 44, data storage 46 in the form of a magnetic disk drive, and a display controller 48 in the form of a graphics card.

The customer display module 20 is connected to the controller module 14 via the graphics card 48 installed in the controller module 14. The other ATM modules (22 to 36) are connected to the ATM controller 14 via a device bus 38 and one or more internal controller buses 39.

When the ATM is powered up, the main memory 44 is loaded with an ATM runtime platform 52 and a control application 54, both of which are stored on the magnetic disk drive 46.

The ATM runtime platform 52 includes: (i) components from a conventional operating system (in this embodiment, Windows XP (trademark), available from Microsoft Corporation (trade mark)), and (ii) proprietary components, including drivers for the some of the modules described above (such as the cash dispenser module 30).

The control application 54 includes a graphical user interface (GUI) program 56 that presents a sequence of screens on the customer display module 20 to a customer at the ATM. The control application 54 also collates information from the customer (for example, customer account information from a customer's ATM card, transaction request, transaction amount, and the like), obtains authorisation for a transaction request from a remote authorization server (not shown), and instructs modules within the ATM 10, as needed, to fulfil an authorized transaction.

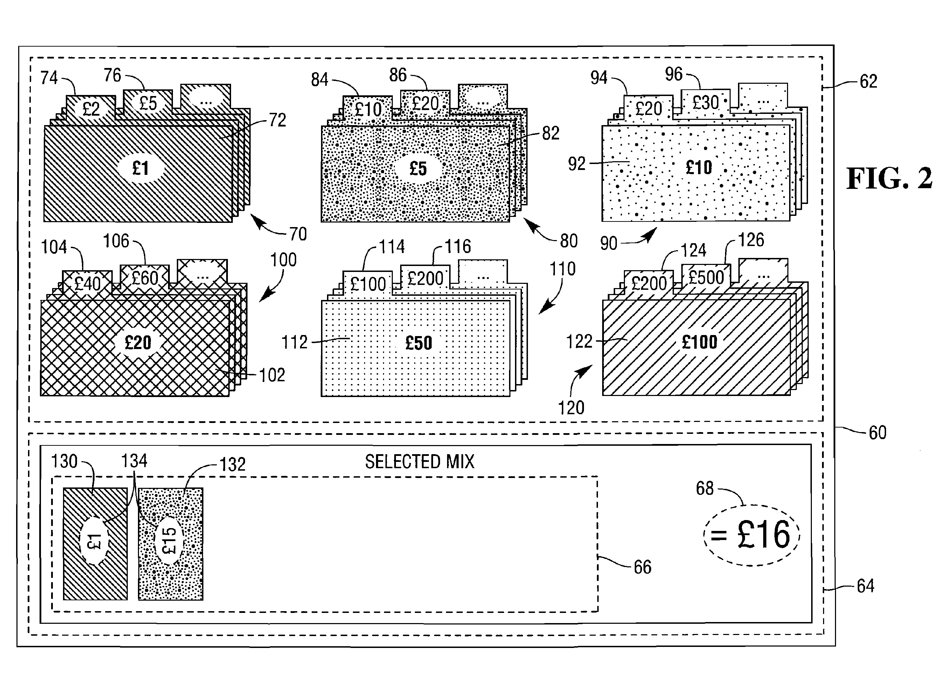

Reference will now also be made to Fig 2, which is a pictorial diagram of a graphical user interface (GUI) 60 presented on the customer display 20 of the ATM 10.

The GUI 60 comprises a denomination region 62 and a selection region 64.

The denomination region 62 includes a plurality of groups (six of which are shown, labelled 70, 80, 90, 100, 110, and 120) of different denominations (in this embodiment £1, £5, £10, £20, £50, £100), each group illustrating a selectable front media item (72, 82, 92, 102, 112, and 122 respectively) indicating the denomination value.

Each group (for example, group 72) also includes at least one, but in this embodiment a plurality of, selectable tabs (for example, tabs 74, 76). Each tab 74, 76 on a group 72 illustrates a value for a multiple of that denomination value. For example, tab 74 indicates £2 (two £1 notes), and tab 76 indicates £5 (five £1 notes). Similarly, group 90 comprises images representing £10 notes. Tab 94 indicates £20 (two £10 notes), and tab 76 indicates £30 (three £10 notes).

The selection region 64 comprises a display area 66 and a running total area 68.

The display area 66 displays the selections the user has made, which includes one or more selected front media items (72, 82, 92, 102, 112, 122) and one or more selected tabs (for example, 74, 76, 84, 86, 104, 116). In this embodiment, this is implemented by displaying an image 130,132 of each denomination selected, where the image includes a numeric value 134 equal to the total value of selected media items of that denomination. In this example, there is an image 130 of a £1 denomination, and an image 132 of a £5 denomination. The £1 image 130 indicates that only one media item has been selected (the numeric value 134 is £1 ); the £5 image 132 indicates that three such media items have been selected (the numeric value 134 is £15), which may have been three individual media items 82, or tab 84 plus an individual media item 82.

In this embodiment (although not clearly shown in Fig 2), each group (for example, group 90) is displayed in a different colour to all other groups (for example, groups 70, 80, 100, 110 and 120). The colours are used consistently for the same group in the denomination region 62 and the display area 66. For example, the £1 group 70 has the same colour as the £1 image 130.

The running total area 68 indicates the total value of media items placed by the user in the selection region 64.

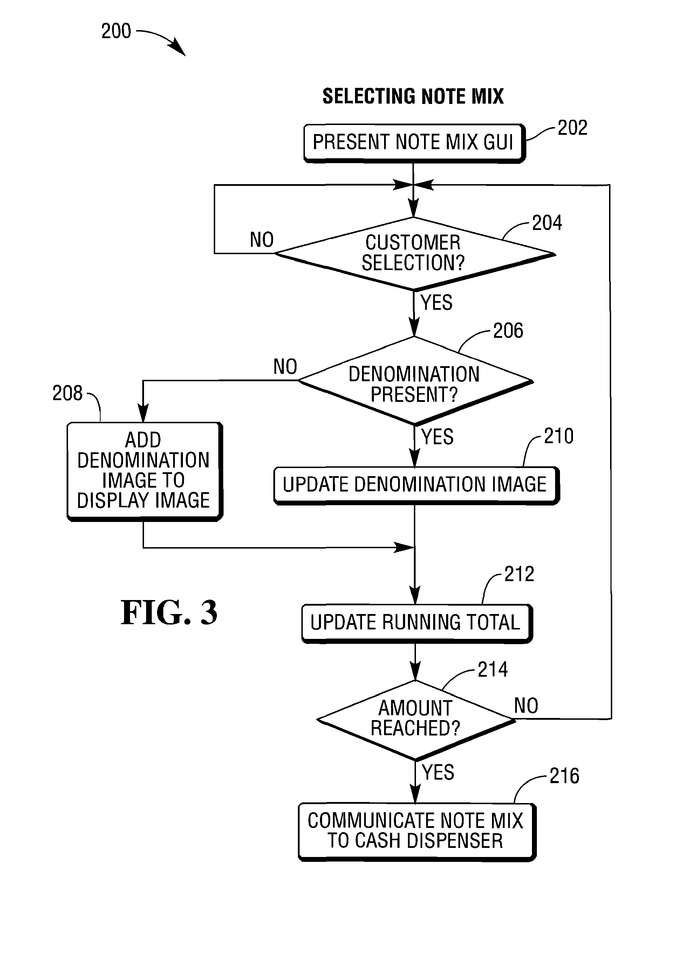

The operation of the ATM 10 in allowing a user to select a desired mix of the type and quantity of denominations for a dispense transaction will now be described with reference to Fig 3, which is a flowchart 200 illustrating steps implemented by the ATM 10 in such a dispense transaction.

Prior to the steps of flowchart 200, the customer has identified himself/herself, selected a dispense cash transaction, selected a dispense amount (in this example, £56), and authorized the transaction. These steps are well known in the art.

The next step, which is the first step of the flowchart 200, is the GUI presentation step 202, in which the GUI program 56 presents the GUI 60 to the customer on the customer display 20 to allow the customer to select the type and quantity of notes desired to fulfil the cash dispense transaction.

The GUI program 56 then waits until the customer makes a selection (step 204). The customer makes a selection by dragging (using a finger or stylus on the touchscreen display 20) either an individual media item or a tab from the denomination region 62 to the selection region 64.

The GUI program 56 then ascertains if the selected media item or tab relates to a note denomination that has already been selected and placed in the selection region 64 (step 206).

If the note denomination has not already been selected, then the GUI program 56 adds the denomination image as an image in the display area 66 and adds a numeric value 134 to the image equal to the individual media item or tab value, as appropriate (step 208).

If the note denomination has already been selected, then the GUI program 56 updates the denomination image in the display area 66 corresponding to the denomination selected (step 210). This is achieved by incrementing the numeric value 134 by the appropriate amount (that is, either the individual media item value or the tab value, whichever was selected by the customer).

Once the display area 66 has been updated (either through step 208 or 210), the GUI program 56 then updates the running total area 68 to indicate the total amount of notes selected so far (step 212).

The GUI program 56 then ascertains if the running total equals the cash dispense amount requested by the customer (in this example, £56) (step 214).

If the running total does not equal the cash dispense amount requested by the customer, then the GUI program 56 awaits the next selection (returning to step 204).

If the running total does equal the cash dispense amount requested by the customer, then the GUI program 56 communicates the type and quantity of denominations selected by the customer (that is, the contents of the display area 66) to the cash dispenser module 30 (step 216). In this embodiment, the GUI program 56 communicates this denomination information to another portion of the control application 54, which creates a signal encoding the selected denomination information. The encoded signal is then transmitted to the cash dispense module 30. In practical embodiments, the encoded signal is transmitted to a controller (not shown) within the cash dispense module 30 that controls the operation of that module 30.

The cash dispenser module 30 receives this denomination information and dispenses the requested mix of note denominations to the customer in accordance with those selected by the customer using the GUI 60.

It will now be appreciated that this embodiment provides a customer with a simple graphical user interface that enables the customer to select a desired mix of denominations in a quick and simple manner.

Various modifications may be made to the above described embodiment within the scope of the invention, for example, in other embodiments, the GUI may include a confirmation button so that the customer selects the confirmation button to inform the GUI program 56 that the customer selection is complete. This confirmation button may be used in embodiments where the customer does not select a cash dispense amount prior to selecting the denomination mix; that is, the denomination selection may be used instead of a separate transaction amount selection.

In some embodiments, the tabs may indicate a predetermined multiple of the denomination associated with the group having the tab; whereas, in other embodiments, the tabs may be dynamically assigned so that a tab value may be reduced or increased as one or more selected front media items or tabs are placed in the selection region by the user.

In other embodiments, more or fewer tabs may be provided than illustrated in the embodiment above.

In other embodiments, more or fewer denominations may be provided than those illustrated above. For example, some ATMs may only provide two different denominations; whereas, some teller assist terminals may provide eight different denominations.

In other embodiments, the terminal may be a teller-assist terminal operated by a member of staff. The staff member may use a mouse or other pointer device instead of a touch-sensitive display.

In other embodiments, the terminal may dispense valuable media other than banknotes, for example, casino chips.

In other embodiments, different currencies than pound sterling may be used, and/or multiple currencies may be dispensed by the terminal.

In other embodiments, a different fulfilment module may be used than a cash dispenser, for example, a printer may be used to print selected denominations (not currency denominations) on demand. Printable denominations may include coupons, passes, postage stamps, and the like.

In other embodiments, the encoded signal transmitted to the cash dispense module may indicate a quantity of media items to be dispensed and a cassette identifier from which that quantity of media items is to be dispensed. For example, the encoded signal may indicate that four items are to be dispensed from cassette one, and three items from cassette two. In such embodiments, the cash dispenser does not need to know what media items are located in the cassettes.

The steps of the methods described herein may be carried out in any suitable order, or simultaneously where appropriate. The methods described herein may be performed by software in machine readable form on a tangible storage medium or as a propagating signal.

The terms "comprising", "including", "incorporating", and "having" are used herein to recite an open-ended list of one or more elements or steps, not a closed list. When such terms are used, those elements or steps recited in the list are not exclusive of other elements or steps that may be added to the list.

Unless otherwise indicated by the context, the terms "a" and "an" are used herein to denote at least one of the elements, integers, steps, features, operations, or components mentioned thereafter, but do not exclude additional elements, integers, steps, features, operations, or components.

## Claims

1. A method for enabling a user to select a mix of denominations to complete a dispense transaction for a desired amount, the method comprising:
(i) presenting to the user a denomination selection screen (60) including
(a) a denomination region (62) including a plurality of groups (70, 80, 90, 100, 110, 120) of different denominations, each group (70, 80, 90, 100, 110, 120) illustrating a selectable front media item (72, 82, 92, 102, 112, 122) indicating the denomination value, and at least one selectable tab (74, 76; 84,86; 94,96) illustrating a value for a multiple of that denomination value; and
(b) a selection region (64) into which one or more selected front media items (72, 82, 92, 102, 112, 122) and one or more selected tabs (74, 76; 84,86; 94,96) can be placed by the user until the desired amount to be dispensed is reached; and
(ii) creating a signal indicative of the selected front media items (72, 82, 92, 102, 112, 122) and the selected tabs (74, 76; 84,86; 94,96) so that the created signal can be used by a dispenser to dispense the desired amount comprising the selected denominations.

2. A method according to claim 1, wherein the method further comprises transmitting the created signal to a controller (14) associated with a dispenser.

3. A method according to claim 1 or 2, wherein the method further comprises dispensing a desired amount to the user based on the transmitted signal, where the desired amount comprises denominations of the type and number corresponding to the type and number of denominations selected by the user.

4. A method according to any of claims 1 to 3, wherein presenting to the user a denomination selection screen (60) is implemented by a graphical user interface (60).

5. A method according to any preceding claim, wherein the denominations comprise currency denominations.

6. A method according to any preceding claim, wherein each group (70, 80, 90, 100, 110, 120) of different denominations includes a plurality of selectable tabs (74,76; 84,86; 94,96; 104,106; 114,116; 124;126), each tab illustrating a different value.

7. A method according to any preceding claim, wherein the selection region (64) includes a total area (68) that displays the total amount placed by the user in the selection region (64).

8. A graphical user interface (60) for enabling a user to select a mix of denominations to complete a dispense transaction for a desired amount, the graphical user interface (60) comprising:
(a) a denomination region (62) including a plurality of groups (70, 80, 90, 100, 110, 120) of different denominations, each group (70, 80, 90, 100, 110, 120) illustrating a selectable front media item (72, 82, 92, 102, 112, 122) indicating the denomination value, and at least one selectable tab (74,76; 84,86; 94,96; 104,106; 114,116; 124;126) illustrating a value for a multiple of that denomination value; and
(b) a selection region (64) into which one or more selected front media items (72, 82, 92, 102, 112, 122) and one or more selected tabs (74,76; 84,86; 94,96; 104,106; 114,116; 124;126) can be placed by the user until the desired amount to be dispensed is reached.

9. A system comprising a display (20); a processor (42); and a storage device (46) operable to store instructions that when executed by the processor (42) presents on the display (20) a graphical user interface (60) according to claim 8.

10. A system according to claim 9, wherein the system further comprises a dispenser (30) for dispensing media items to the user in response to a signal received from the processor (42).

11. A system according to claim 9 or 10, wherein the system comprises a self-service terminal (10).

12. A system according to claim 11, wherein the self-service terminal (10) comprises an automated teller machine.

13. A system according to claim 9, wherein the system comprises a teller-assisted terminal.

14. A computer program (56) that, when executed, performs the method steps of claim 1.

15. A computer readable medium tangibly embodying the computer program of claim 14.
